# EUROPEAN PATENT SPECIFICATION

(11) **EP 4 202 831 B1**
(45) Date of publication and mention of the grant of the patent: **02.07.2025**
(21) Application number: 21859559.3
(22) Date of filing: 24.03.2021
(51) Int. Cl.: G06T 7/246, G06T 7/136, G06T 7/11

(54) **IMAGE-BASED MOTION DETECTION METHOD**
BILDBASIERTES BEWEGUNGSDETEKTIONSVERFAHREN
PROCÉDÉ DE DÉTECTION DE MOUVEMENT BASÉ SUR DES IMAGES

(30) Priority: 31.08.2020 CN 202010894625
(43) Date of publication of application: 28.06.2023
(73) Proprietor: Shanghai Shende Green Medical Era Healthcare Technology Co., Ltd., Shanghai 200233 (CN); Shende (Ningbo) Medical Device Technology Co., Ltd, Ningbo, Zhejiang 315800 (CN); Nantong Shende Medical Device Technology Co., Ltd, Nantong, Jiangsu 226014 (CN)
(72) Inventor: WEI, Bo, Shanghai 200233 (CN); GUO, Junjie, Shanghai 200233 (CN); ZHANG, Shengfa, Shanghai 200233 (CN); GU, Jiawei, Shanghai 200233 (CN); SU, Zhiqiang, Shanghai 200233 (CN); YANG, Bo, Shanghai 200233 (CN); WU, Hao, Shanghai 200233 (CN); CUI, Lei, Shanghai 200233 (CN); TIAN, Zhou, Shanghai 200233 (CN)
(74) Representative: Osterhoff, Utz
(86) International application number: PCT/CN2021/082588
(87) International publication number: WO 2022/041710

(56) References cited:
- CN-A- 102 810 207
- CN-A- 102 810 207
- CN-A- 106 033 603
- CN-A- 108 229 307
- CN-A- 109 389 620
- CN-A- 112 070 801
- US-A1- 2010 118 156
- US-A1- 2012 308 144
- US-A1- 2013 322 766
- US-A1- 2014 294 079

## Description

### TECHNICAL FIELD

The present disclosure relates to the technical field of motion detection method, and in particular, to an image-based motion detection method.

### BACKGROUND

On the one hand, for some non-invasive treatments, anatomical surface images of the treatment site need to be acquired in real time to observe and monitor the treatment during the treatment process, and MR or CT images are generally applied. On the other hand, the non-invasive treatment equipment may not be fixed to the body, which may cause treatment accidents if the patient moves. For this situation, intraoperative monitoring images can be used to detect the patient's motion.

Existing methods of motion detection may be divided into image-based detection and sensor-based detection.

Sensor-based detection methods in non-invasive treatment, such as using laser rangefinders or ultrasound radar to detect movement, not only require an additional equipment, but also may only detect extracorporeal information except internal body movements caused by breathing or some reasons.

Most of the image-based motion detection methods adopt the processing of images generated by cameras and other devices and the processing includes inter-frame differencing, background differencing and optical flowing. Real-world images generated by cameras generally contain color information. The image content includes background and target. In some cases, the target object is known and the features of the target can be obtained from images from other sources, thereby to track the target on the detection image. In other cases, a deep image and a sensor may provide more information. As for non-invasive treatments, anatomical surface images generated by medical imaging equipment should be used, since the target of the detection movement is the tissue and organs inside the body. Medical images, relative to images of real objects, have only pure grayscale information and relatively less image details. Since the medical images are anatomical surface images, tissues and organs may be mixed and stacked in different forms caused by different imaging angles and different imaging methods. Such that it is also difficult to obtain target features from images of other sources. Therefore, the existing motion detection algorithms are not applicable to medical images.

In the motion detection based on medical images, the current practice determines the movement only by simply comparing the images before and during treatment or the marked points in the images. However, the human body is not a rigid body, the movement that occurs may be partial, and the moving parts may not affect the treatment. Because the imaging parameters or the surrounding environment change, the images of the unmoving parts at different times may also have different grayscale or noise, which brings additional interference to the detection. Therefore, current motion detection means lack flexible adaptations for motion judgment. Additional prior art is known from US 2010/118156.

### SUMMARY

The purpose of the present disclosure is to provide an image-based motion detection method with good accuracy, flexibility and comprehensive information in order to overcome the above-mentioned defects of the prior art.

The purpose of the present disclosure may be achieved by the following technical solutions.

The present disclosure provides an image-based motion detection method, including:
acquiring a reference image of a detecting object, determining several first detecting points in the reference image, extracting basic markings centered on the first detecting points in the reference image and classifying all the basic markings into several categories, wherein each category comprises at least one basic marking;
acquiring a detecting image of the detecting object, wherein the detecting image and the reference image include the same image parameters and the image parameters include position, direction, size and resolution;
matching the basic markings in the detecting image with the basic markings in the reference image, obtaining an offset vector of each basic marking between the reference image and the detecting image, and determining whether a norm of the offset vector of each basic marking is greater than a second threshold, if yes, determining that the basic marking has moved; and if no, determining that the basic marking has not moved;
determining whether the number of the basic markings that have moved in each category is greater than a third threshold, if yes, determining that the category has moved; and if no, determining that the category has not moved. Both the second threshold and the third threshold can be set flexibly, increasing the threshold reduces false positives and decreasing the threshold low reduces false negatives, which can be set flexibly for different application scenarios.
determining a whole moving state and a part moving state of the detecting object according to a moving state of each category. The moving states include whole motion, part motion, and no motion.

In some embodiments, the method further includes clustering all basic markings of each category to obtain several clusters; recording one cluster including the largest number of the basic markings as Cmax; in response that the proportion of the number of basic markings in Cmax to the number of basic markings in the category of Cmax is not less than a first threshold, calculating an average value *X̅* of offset vector of all the basic markings in Cmax and determining *X̅* as the offset vector of basic markings in the other clusters of the category of Cmax, which may help to correct the basic marking with large deviation.

In some embodiments, the operation of clustering all basic markings of each category specifically includes classifying two basic markings into a cluster if a norm of a difference between offset vectors of the two basic markings is less than a fifth threshold; and classifying unclassified basic markings into the cluster if differences between offset vectors of the unclassified basic markings and an average value of offset vectors in the cluster.

In some embodiments, the basic markings are image fragments, the operation of extracting image fragments specifically includes extracting images within a range of a first preset distance centered on the first detecting points to construct the image fragments.

In some embodiments, in response that the number of the first detecting points in the reference image is less than a fourth threshold, expanding detecting points, and the operation of expanding the detecting points includes:
determining the fourth threshold; centered on the first detecting points, determining several second detecting points within a range of a second preset distance; centered on the second detecting points, extracting images in the range of the first preset distance in the reference image to construct the expanded image fragments. The first preset distance may be set flexibly.

In some embodiments, the method further includes determining an entropy threshold; and saving images whose entropy is greater than the entropy threshold as expanded image fragments.

In some embodiments, the basic markings are image feature points, the operation of extracting the image feature points specifically includes:
centered on the first detecting points, identifying the image feature points within a range of a third preset distance in the reference image.

In some embodiments, the image feature points are Harris corner points.

In some embodiments, a density-based clustering algorithm is adopted to classify satisfied basic markings into a category.

In some embodiments, the clustering algorithm is DBSCAN.

In some embodiments, the method further includes dividing the reference image to obtain different image dividing units and classifying the basic markings in a same image dividing unit into a same category.

Compared with the prior art, the present disclosure has the following beneficial effects.
(1) In the present disclosure, the method includes acquiring a reference image of a detecting object, determining several first detecting points in the reference image, extracting basic markings centered on the first detecting points in the reference image and classifying all the basic markings into several categories, wherein each category comprises at least one basic marking; acquiring a detecting image of the detecting object, wherein the detecting image and the reference image include the same image parameters and the image parameters include position, direction, size and resolution; matching the basic markings in the detecting image with the basic markings in the reference image, obtaining an offset vector of each basic marking between the reference image and the detecting image, and determining whether a norm of the offset vector of each basic marking is greater than a second threshold, if yes, determining that the basic marking has moved; and if no, determining that the basic marking has not moved; determining whether the number of the basic markings that have moved in each category is greater than a third threshold, if yes, determining that the category has moved; and if no, determining that the category has not moved; and determining a whole moving state and a part moving state of the detecting object according to a moving state of each category. The method may avoid the interference of the basic marking with large deviation on the detection results. The detection results are more comprehensive and accurate. The number and position of the first detection point, the second threshold and the third threshold can be set flexibly, thereby balancing the accuracy and efficiency of motion detection and having good flexibility.
(2) The method further includes clustering all basic markings of each category to obtain several clusters; recording one cluster including the largest number of the basic markings as Cmax; in response that the proportion of the number of basic markings in Cmax to the number of basic markings in the category of Cmax is not less than a first threshold, calculating an average value *X̅* of offset vector of all the basic markings in Cmax and determining *X̅* as the offset vector of basic markings in the other clusters of the category of Cmax, which may help to correct the basic marking with large deviation and improve the accuracy of detection.
(3) The present disclosure adopts the image fragments as basic markings by extracting images within a range of a first preset distance centered on the first detecting points to construct the image fragments, which achieves higher matching accuracy of the basic marking and more accurate motion detection results of the basic marking.
(4) The present disclosure adopts the operations of determining a fourth threshold; in response that the number of the first detecting points in the reference image is less than a fourth threshold, expanding detecting points; centered on the first detecting points, determining several second detecting points within a range of a second preset distance; determining an entropy threshold; centered on the second detecting points, extracting images in the range of the first preset distance in the reference image; and saving images whose entropy is greater than the entropy threshold as expanded image fragments, which ensures adequate number of image fragments and the validity of each image fragment with high detection accuracy.
(5) The present disclosure adopts the operations of dividing the reference image to obtain different image dividing units and classifying the basic markings in a same image dividing unit into a same category. It is suitable for anatomical structures of different sizes and can also perform part motion detection of anatomical structures.

### BRIEF DESCRIPTION OF THE DRAWINGS

FIG. 1 is a schematic flowchart of an image-based motion detection method according to some embodiments of the present disclosure.
FIG. 2 is a schematic view of classifying categories according to some embodiments of the present disclosure.
FIG. 3 is a schematic view of clustering according to some embodiments of the present disclosure.
FIG. 4 is a schematic view of correcting categories according to some embodiments of the present disclosure.

### DETAILED DESCRIPTION OF THE EMBODIMENTS

The present disclosure is described in detail below in conjunction with the drawings and specific embodiments. The embodiments are implemented with the technical solution of the present disclosure, which gives detailed implementation and specific operation procedures. But the protection scope of the present disclosure is not limited to the following embodiments.

### Embodiment 1:

The present disclosure provides an image-based motion detection method, including:
Acquiring a reference image of a detecting object, determining several first detecting points in the reference image, extracting basic markings centered on the first detecting points in the reference image and classifying all the basic markings into several categories, wherein each category comprises at least one basic marking;
Acquiring a detecting image of the detecting object, wherein the detecting image and the reference image include the same image parameters and the image parameters include position, direction, size and resolution;
Matching the basic markings in the detecting image with the basic markings in the reference image, obtaining an offset vector of each basic marking between the reference image and the detecting image, and determining whether a norm of the offset vector of each basic marking is greater than a second threshold, if yes, determining that the basic marking has moved; and if no, determining that the basic marking has not moved;
Determining whether the number of the basic markings that have moved in each category is greater than a third threshold, if yes, determining that the category has moved; and if no, determining that the category has not moved;
Determining a whole moving state and a part moving state of the detecting object according to a moving state of each category.

### Embodiment 2:

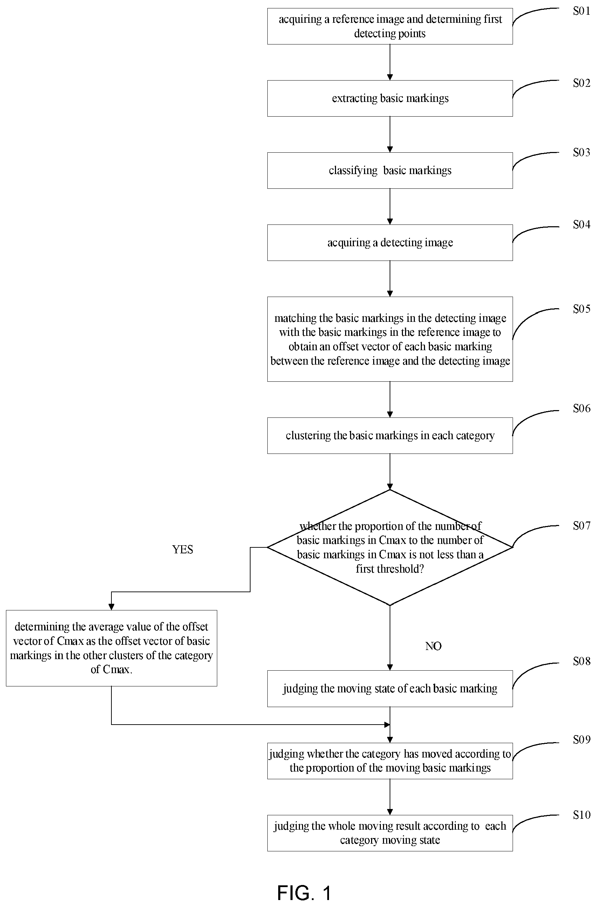

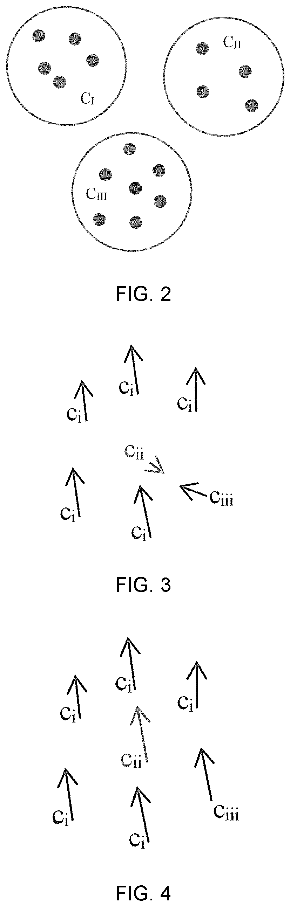

The present disclosure provides an image-based motion detection method as shown in FIG. 1, including:
S01: acquiring a reference image of a detecting object and determining several first detecting points in parts of the reference image to determine whether movement occurs;
S02: extracting basic markings centered on the first detecting points in the reference image, wherein the basic markings are image fragments, extracting images within a range of a first preset distance centered on the first detecting points to construct the image fragments;
S03: as shown in FIG. 2, classifying satisfied basic markings into a category by adopting a density-based clustering algorithm to obtain three categories denoted as CI, CII and CIII, and each category includes at least one basic marking, wherein the clustering algorithm is DBSCAN. The offset vectors of the basic markings located in the same category have approximate offset vectors if motion occurs;
S04: acquiring a detecting image of the detecting object, wherein the detecting image and the reference image include the same image parameters and the image parameters include position, direction, size and resolution;
S05: matching and comparing the position of the basic markings in the detecting image with the basic markings in the reference image to obtain an offset vector of each basic marking between the reference image and the detecting image;
S06: clustering all basic markings of each category to obtain several clusters; classifying two basic markings into a cluster if a norm of a difference between offset vectors of the two basic markings is less than a fifth threshold; and classifying unclassified basic markings into the cluster if differences between offset vectors of the unclassified basic markings and an average value of offset vectors in the cluster to obtain several clusters, and recording one cluster including the largest number of the basic markings as Cmax, as shown in FIG.3, ci, cii and ciii are three different clusters in the same category, wherein ci includes the largest number of the basic markings and is recorded as Cmax;
S07: in response that the proportion of the number of basic markings in Cmax to the number of basic markings in the category of Cmax is not less than a first threshold, calculating an average value *X̅* of offset vector of all the basic markings in Cmax; and determining *X̅* as the offset vector of basic markings in the other clusters of the category of Cmax. As shown in FIG.4, determining the average value of offset vector of all the basic markings in ci as the offset vector of basic markings in cii and ciii;
S08: determining whether a norm of the offset vector of each basic marking is greater than a second threshold, if yes, determining that the basic marking has moved; and if no, determining that the basic marking has not moved;
S09: determining whether the proportion of the number of the basic markings that have moved in each category is greater than a third threshold, if yes, determining that the category has moved; and if no, determining that the category has not moved;
S10: determining a whole moving state and a part moving state of the detecting object according to a moving state of each category. The moving states include whole motion, part motion, and no motion.

The operation of determining the fourth threshold; in response that the number of the first detecting points in the reference image is less than a fourth threshold, expanding detecting points, and the operation of expanding the detecting points includes:
centered on the first detecting points, determining several second detecting points within a range of a second preset distance; centered on the second detecting points, extracting images in the range of the first preset distance in the reference image to construct the image fragments; determining an entropy threshold; and saving images whose entropy is greater than the entropy threshold as expanded image fragments. The entropy value reflects the amount of information contained in the image segment, which can reflect whether the image segment contains anatomical structures or not. Such that all the image segments obtained by the expansion contain anatomical structures.

In the motion detection method, the second detecting point is used to make up for the insufficient number of the first detecting point, thereby to expand the detecting range. The second detecting point and the first detecting point are in the same anatomical structure, which may avoid the movement of other parts form disturbing the detection results. The first detection point can be set at a location with good anatomical structures, thereby facilitating the matching of individual image segments in the detecting image.

### Embodiment 3:

In some embodiments, the basic markings are image feature points and the image feature points are Harris corner points. The operation of extracting the image feature points specifically includes centered on the first detecting points, identifying the image feature points within a range of a third preset distance in the reference image. Other operations are similar to embodiment 2.

### Embodiment 4:

In some embodiments, the method further includes dividing the reference image based on different anatomical structures to obtain different image dividing units and classifying the basic markings in the same image dividing unit into the same category. Other operations are similar to embodiment 2.

The image-based motion detection methods provided in embodiments 1-4 adopt the way of clustering to process the results of all basic markings, which may correct the basic markings with large deviations. Meanwhile the part motion of the detecting object may be observed according to the motion of the category, and the motion state may be judged by judging the proportion of all basic marking, which may avoid the interference of some wrong basic markings. Since the threshold value may be changed, the method may be flexibly used in different usage scenarios.

The above describes in detail a preferred specific embodiment of the present disclosure. It should be understood that a person of ordinary skill in the art can make many modifications and changes according to the idea of the present disclosure without creative working. The object of the invention is achieved by the subject-matter of the independent claims. Advantageous embodiments are defined in the dependent claims.

## Claims

1. An image-based motion detection method, **characterized by** comprising:
acquiring a reference image of a detecting object, determining several first detecting points in the reference image, extracting basic markings centered on the first detecting points in the reference image and classifying all the basic markings into several categories, wherein each category comprises at least one basic marking;
acquiring a detecting image of the detecting object, wherein the detecting image and the reference image include the same image parameters and the image parameters include position, direction, size and resolution;
matching the basic markings in the detecting image with the basic markings in the reference image, obtaining an offset vector of each basic marking between the reference image and the detecting image, and determining whether a norm of the offset vector of each basic marking is greater than a second threshold, if yes, determining that the basic marking has moved; and if no, determining that the basic marking has not moved;
determining whether the number of the basic markings that have moved in each category is greater than a third threshold, if yes, determining that the category has moved; and if no, determining that the category has not moved; and
determining a whole moving state and a part moving state of the detecting object according to a moving state of each category.

2. The image-based motion detection method of claim 1, further comprising:
clustering all basic markings of each category to obtain several clusters;
recording one cluster including the largest number of the basic markings as Cmax;
in response that the proportion of the number of basic markings in Cmax to the number of basic markings in the category of Cmax is not less than a first threshold, calculating an average value *X̅* of offset vector of all the basic markings in Cmax; and
determining *X̅* as the offset vector of basic markings in the other clusters of the category of Cmax.

3. The image-based motion detection method of claim 2, wherein the operation of clustering all basic markings of each category specifically comprises:
classifying two basic markings into a cluster if a norm of a difference between offset vectors of the two basic markings is less than a fifth threshold; and
classifying unclassified basic markings into the cluster if differences between offset vectors of the unclassified basic markings and an average value of offset vectors in the cluster.

4. The image-based motion detection method of claim 1, wherein the basic markings are image fragments, the operation of extracting image fragments specifically comprises:
extracting images within a range of a first preset distance centered on the first detecting points to construct the image fragments.

5. The image-based motion detection method of claim 4, wherein in response that the number of the first detecting points in the reference image is less than a fourth threshold, expanding detecting points, and the operation of expanding the detecting points comprises:
determining the fourth threshold;
centered on the first detecting points, determining several second detecting points within a range of a second preset distance;
determining an entropy threshold;
centered on the second detecting points, extracting images in the range of the first preset distance in the reference image;
saving images whose entropy is greater than the entropy threshold as expanded image fragments.

6. The image-based motion detection method of claim 1, wherein the basic markings are image feature points, and the operation of extracting the image feature points specifically comprises:
centered on the first detecting points, identifying the image feature points within a range of a third preset distance in the reference image.

7. The image-based motion detection method of claim 6, wherein the image feature points are Harris corner points.

8. The image-based motion detection method of claim 1, wherein a density-based clustering algorithm is adopted to classify satisfied basic markings into a category.

9. The image-based motion detection method of claim 8, wherein the clustering algorithm is DBSCAN.

10. The image-based motion detection method of claim 1, further comprising:
dividing the reference image to obtain different image dividing units and classifying the basic markings in a same image dividing unit into a same category.

## Patentansprüche

1. Bildbasiertes Bewegungsdetektionsverfahren, **dadurch gekennzeichnet, dass**
Erfassen eines Referenzbildes eines zu detektierenden Objekts, Bestimmen mehrerer erster Detektionspunkte im Referenzbild, Extrahieren von Grundmarkierungen, die auf den ersten Detektionspunkten im Referenzbild zentriert sind, und Klassifizieren aller Grundmarkierungen in mehrere Kategorien, wobei jede Kategorie mindestens eine Grundmarkierung umfasst;
Erfassen eines Detektionsbildes des zu detektierenden Objekts, wobei das Detektionsbild und das Referenzbild dieselben Bildparameter umfassen und die Bildparameter Position, Richtung, Größe und Auflösung umfasst;
Abgleichen der Grundmarkierungen im Detektionsbild mit den Grundmarkierungen im Referenzbild, Ermitteln eines Versatzvektors jeder Grundmarkierung zwischen dem Referenzbild und dem Detektionsbild und Bestimmen, ob die Norm des Verschiebungsvektors jeder Grundmarkierung größer als ein zweiter Schwellenwert ist; falls ja, Bestimmen, dass die Grundmarkierung bewegt wurde; und falls nein, Bestimmen, dass die Grundmarkierung nicht bewegt wurde;
Bestimmen, ob die Anzahl der Grundmarkierungen, die sich in jeder Kategorie bewegt haben, größer als ein dritter Schwellenwert ist; wenn ja, Bestimmen, dass die Grundmarkierung bewegt wurde; und wenn nicht, Bestimmen, dass die Grundmarkierung nicht bewegt wurde; und
Bestimmen eines Gesamtbewegungszustands und eines Teilbewegungszustands des zu detektierenden Objekts gemäß einem Bewegungszustand jeder Kategorie.

2. Bildbasiertes Bewegungsdetektionsverfahren nach Anspruch 1, weiterhin umfassend:
Clusterbildung aller Grundmarkierungen jeder Kategorie, um mehrere Cluster zu erhalten;
Aufzeichnung eines Clusters, das die größte Anzahl der Grundmarkierungen umfasst, als Cmax;
Als Reaktion darauf, dass das Verhältnis der Anzahl der Grundmarkierungen in Cmax zur Anzahl der Grundmarkierungen in der Kategorie von Cmax nicht kleiner als ein erster Schwellenwert ist, Berechnung eines Durchschnittswerts *X̅* des Versatzvektors aller Grundmarkierungen in Cmax; und
Bestimmung von *X̅* als den Versatzvektor der Grundmarkierungen in den anderen Clustern der Kategorie Cmax.

3. Bildbasiertes Bewegungsdetektionsverfahren nach Anspruch 2, wobei der Vorgang der Clusterbildung aller Grundmarkierungen jeder Kategorie speziell umfasst:
Klassifizieren von zwei Grundmarkierungen in einen Cluster, wenn die Norm eines Unterschieds zwischen den Versatzvektoren der beiden Grundmarkierungen kleiner als ein fünfter Schwellenwert ist; und
Klassifizieren von nicht klassifizierten Grundmarkierungen in den Cluster, wenn Unterschiede zwischen den Versatzvektoren der nicht klassifizierten Grundmarkierungen und einem Durchschnittswert der Versatzvektoren im Cluster bestehen.

4. Bildbasiertes Bewegungsdetektionsverfahren nach Anspruch 1, wobei die Grundmarkierungen Bildfragmente sind und der Vorgang der Extraktion von Bildfragmenten speziell umfasst:
Extrahieren von Bildern innerhalb eines Bereichs einer ersten voreingestellten Entfernung, die um die ersten Erkennungspunkte zentriert ist, um die Bildfragmente zu konstruieren.

5. Bildbasiertes Bewegungsdetektionsverfahren nach Anspruch 4, wobei, als Reaktion darauf, dass einer Anzahl der ersten Detektionspunkt im Referenzbild kleiner als ein vierter Schwellenwert ist, die Detektionspunkt erweitert werden, und wobei der Vorgang der Erweiterung der Detektionspunkte umfasst:
Bestimmen des vierten Schwellenwerts;
Zentrieren auf die ersten Detektionspunkt, Bestimmen mehrerer zweiter Detektionspunkt innerhalb eines Bereichs einer zweiten voreingestellten Entfernung;
Bestimmen einer Entropieschwelle;
Zentrieren auf die zweiten Detektionspunkt, Extrahieren von Bildern im Bereich der ersten voreingestellten Entfernung im Referenzbild;
Speichern von Bildern, deren Entropie größer als der Entropie-Schwellenwert ist, als erweiterte Bildfragmente.

6. Bildbasiertes Bewegungsdetektionsverfahren nach Anspruch 1, wobei die Grundmarkierungen Bildmerkmalpunkte sind und der Vorgang der Extraktion von Bildmerkmalpunkte speziell umfasst:
Zentrieren auf die ersten Detektionspunkt, Identifizieren der Bildmerkmalspunkte innerhalb eines Bereichs einer dritten voreingestellten Entfernung im Referenzbild.

7. Bildbasiertes Bewegungsdetektionsverfahren nach Anspruch 6, wobei die Bildmerkmalspunkte Harris-Eckpunkte sind.

8. Bildbasiertes Bewegungsdetektionsverfahren nach Anspruch 1, wobei ein dichtebasiertes Clustering-Algorithmus verwendet wird, um erfüllte Grundmarkierungen in eine Kategorie einzuordnen.

9. Bildbasiertes Bewegungsdetektionsverfahren nach Anspruch 8, wobei der Clustering-Algorithmus DBSCAN ist.

10. Bildbasiertes Bewegungsdetektionsverfahren nach Anspruch 1, weiterhin umfassend:
Unterteilen des Referenzbildes in verschiedene Bildeinheiten und Einordnen der Grundmarkierungen innerhalb derselben Bildeinheit in derselbe Kategorie.

## Revendications

1. Procédé de détection de déplacement sur la base de l'image, **caractérisé en ce qu'**il comprend :
l'acquisition d'une image de référence d'un objet de détection, la détermination de plusieurs premiers points de détection dans l'image de référence, l'extraction de marques de base centrée sur les premiers points de détection dans l'image de référence et la classification de toutes les marques de base en plusieurs catégories, dans lequel chaque catégorie comprend au moins une marque de base ;
l'acquisition d'une image de détection de l'objet de détection, dans lequel l'image de détection et l'image de référence comportent les mêmes paramètres d'image et les paramètres d'image comportent une position, une direction, une taille et une résolution ;
la correspondance des marques de base dans l'image de détection avec les marques de base dans l'image de référence, l'obtention d'un vecteur de décalage de chaque marque de base entre l'image de référence et l'image de détection, et la détermination du fait qu'une norme du vecteur de décalage de chaque marque de base est supérieure à un deuxième seuil, dans l'affirmative, la détermination du fait que la marque de base s'est déplacée ; et dans la négative, la détermination du fait que la marque de base ne s'est pas déplacée ;
la détermination du fait que le nombre de marques de base qui se sont déplacées dans chaque catégorie est supérieur à un troisième seuil, dans l'affirmative, la détermination du fait que la catégorie s'est déplacée, et dans la négative, la détermination du fait que la catégorie ne s'est pas déplacée ; et
la détermination du fait qu'un état de déplacement total et un état de déplacement partiel de l'objet de détection en fonction de l'état de déplacement de chaque catégorie.

2. Procédé de détection de déplacement sur la base de l'image selon la revendication 1, comprenant en outre :
le regroupement de toutes les marques de base de chaque catégorie afin d'obtenir plusieurs groupes ;
l'enregistrement d'un groupe comportant le plus grand nombre de marques de base comme Cmax; en réponse au fait que la proportion du nombre de marques de base dans Cmax par rapport au nombre de marques de base dans la catégorie de Cmax n'est pas inférieure à un premier seuil, le calcul d'une valeur moyenne *X̅* du vecteur de décalage de toutes les marques de base dans Cmax ; et la détermination de *X̅* comme vecteur de décalage des marques de base dans les autres groupes de la catégorie de Cmax.

3. Procédé de détection de déplacement sur la base de l'image selon la revendication 2, dans lequel l'opération de regroupement de toutes les marques de base de chaque catégorie comprend spécifiquement :
la classification de deux marques de base dans un groupe si une norme d'une différence entre des vecteurs de décalage des deux marques de base est inférieure à un cinquième seuil ; et
la classification de marques de base non classées dans le groupe si des différences entre des vecteurs de décalage des marques de base non classées et une valeur moyenne de vecteurs de décalage dans le groupe.

4. Procédé de détection de déplacement sur la base de l'image selon la revendication 1, dans lequel les marques de base sont des fragments d'image, l'opération d'extraction de fragments d'image comprend spécifiquement :
l'extraction d'images dans une plage d'une première distance prédéfinie centrée sur les premiers points de détection afin de construire les fragments d'image.

5. Procédé de détection de déplacement sur la base de l'image selon la revendication 4, dans lequel, en réponse au fait que le nombre des premiers points de détection dans l'image de référence est inférieur à un quatrième seuil, l'extension de points de détection, et l'opération d'extension des points de détection comprend :
la détermination du quatrième seuil ;
centrée sur les premiers points de détection, la détermination de plusieurs seconds points de détection dans une plage d'une deuxième distance prédéfinie ;
la détermination d'un seuil d'entropie ;
centrée sur les seconds points de détection, l'extraction d'images dans la plage de la première distance prédéfinie dans l'image de référence ;
l'enregistrement d'images dont l'entropie est supérieure au seuil d'entropie en tant que fragments d'images étendues.

6. Procédé de détection de déplacement sur la base de l'image selon la revendication 1, dans lequel les marques de base sont des points caractéristiques d'image, et l'opération d'extraction des points caractéristiques d'image comprend spécifiquement :
centrée sur les premiers points de détection, l'identification des points caractéristiques d'image dans une plage d'une troisième distance prédéfinie dans l'image de référence.

7. Procédé de détection de déplacement sur la base de l'image selon la revendication 6, dans lequel les points caractéristiques d'image sont les points d'angle de Harris.

8. Procédé de détection de déplacement sur la base de l'image selon la revendication 1, dans lequel un algorithme de regroupement sur la base de la densité est adopté afin de classer des marques de base satisfaites dans une catégorie.

9. Procédé de détection de déplacement sur la base de l'image selon la revendication 8, dans lequel l'algorithme de regroupement est DBSCAN.

10. Procédé de détection de déplacement sur la base de l'image selon la revendication 1, comprenant en outre :
la division de l'image de référence afin d'obtenir différentes unités de division d'image et la classification des marques de base dans une même unité de division d'image dans une même catégorie.
